# EUROPEAN PATENT APPLICATION

(11) **EP 3 192 717 A1**
(43) Date of publication of application: **19.07.2017**
(21) Application number: 15840223.0
(22) Date of filing: 09.06.2015
(51) Int. Cl.: B61L 27/00, B60L 15/40

(54) **OPERATION CONTROL SYSTEM**

(30) Priority: 12.09.2014 JP 2014186490
(71) Applicant: Kabushiki Kaisha Toshiba, Minato-ku Tokyo 105-8001 (JP)
(72) Inventor: TAJIMA, Masahiro, Tokyo 1058001 (JP); MIYOSHI, Miyako, Tokyo 105-8001 (JP); KOIKE, Osamu, Tokyo 105-8001 (JP); YAMAMOTO, Junko, Tokyo 105-8001 (JP); TONOSAKI, Yukinori, Tokyo 105-8001 (JP)
(74) Representative: Awapatent AB
(86) International application number: PCT/JP2015/066603
(87) International publication number: WO 2016/038957

(57) **Abstract**

An operation control system according to an embodiment includes a ground system and an on-train system. The ground system is configured to be able to communicate with trains running on tracks and includes a first generation unit, a second generation unit, and a third generation unit. The first generation unit generates one or more first run curves predicted for one or more second trains each likely to be a preceding train or a following train with respect to a first train. The second generation unit generates a second run curve for the first train based on the first run curves, the second run curve preventing the first train from being influenced by and influencing running of the second trains. The third generation unit generates navigation for causing the first train to run in accordance with the second run curve. The on-train system is installed on each of the trains and includes a presentation unit configured to present the navigation.

## Description

### FIELD

Embodiments of the present invention relate to an operation control system.

### BACKGROUND

Conventionally, there has been known a technique for controlling acceleration and deceleration of a subject train so as to avoid an incident where the subject train needs to be stopped because of its being excessively close to a preceding train.

### CITATION LIST

### Patent Literature

Patent Literature 1: Japanese Laid-open Patent Publication No. 2005-104417
Patent Literature 2: Japanese Laid-open Patent Publication No. 2011-235737

### SUMMARY OF THE INVENTION

### Problem to be Solved by the Invention

In the above-described technique, a following train of the subject train may possibly be delayed or slowed down as a result of acceleration and deceleration of the subject train.

### Means for Solving Problem

An operation control system according to an embodiment includes a ground system and an on-train system. The ground system is configured to be able to communicate with trains running on tracks and includes a first generation unit, a second generation unit, and a third generation unit. The first generation unit generates one or more first run curves predicted for one or more second trains each likely to be a preceding train or a following train with respect to a first train. The second generation unit generates a second run curve for the first train based on the first run curves, the second run curve preventing the first train from being influenced by and influencing running of the second trains. The third generation unit generates navigation for causing the first train to run in accordance with the second run curve. The on-train system is installed on each of the trains and includes a presentation unit configured to present the navigation.

### BRIEF DESCRIPTION OF DRAWINGS

FIG. 1 is an exemplary diagram illustrating an operation control system according to an embodiment.
FIG. 2 is an exemplary block diagram illustrating the internal configuration of the operation control system according to the embodiment.
FIG. 3 is an exemplary diagram for explaining a method of generating a first run curve according to the embodiment.
FIG. 4A is an exemplary diagram for explaining a preceding target position and a preceding target time in a case where a preceding train of a controlled train is presumed to be present in the embodiment.
FIG. 4B is an exemplary diagram for explaining the preceding target position and the preceding target time in the case where the preceding train of the controlled train is presumed to be present in the embodiment.
FIG. 5A is an exemplary diagram for explaining a following target position and a following target time in a case where a following train of the controlled train is presumed to be present in the embodiment.
FIG. 5B is an exemplary diagram for explaining the following target position and the following target time in the case where the following train of the controlled train is presumed to be present in the embodiment.
FIG. 6A is an exemplary diagram for explaining a preceding target position and a preceding target time in a case where it is presumed that a train to be overtaken has yet to be overtaken by the controlled train in the embodiment.
FIG. 6B is an exemplary diagram for explaining the preceding target position and the preceding target time in the case where it is presumed that the train to be overtaken has yet to be overtaken by the controlled train in the embodiment.
FIG. 7A is an exemplary diagram for explaining a following target position and a following target time in a case where it is presumed that the train to be overtaken has already been overtaken by the controlled train in the embodiment.
FIG. 7B is an exemplary diagram for explaining the following target position and the following target time in the case where it is presumed that the train to be overtaken has already been overtaken by the controlled train in the embodiment.
FIG. 8A is an exemplary diagram for explaining target positions and target times in a case where it is presumed that a preceding train and a following train of the controlled train and a train to be overtaken by the controlled train are all present in the embodiment.
FIG. 8B is an exemplary diagram for explaining the target positions and the target times in the case where it is presumed that the preceding train and the following train of the controlled train and the train to be overtaken by the controlled train are all present in the embodiment.
FIG. 8C is an exemplary diagram for explaining the target positions and the target times in the case where it is presumed that the preceding train and the following train of the controlled train and the train to be overtaken by the controlled train are all present in the embodiment.
FIG. 9 is an exemplary diagram illustrating a second run curve according to the embodiment.
FIG. 10A is an exemplary diagram for explaining a method of generating the second run curve according to the embodiment.
FIG. 10B is an exemplary diagram for explaining a method of generating the second run curve according to the embodiment.
FIG. 10C is an exemplary diagram for explaining a method of generating the second run curve according to the embodiment.
FIG. 10D is an exemplary diagram for explaining a method of generating the second run curve according to the embodiment.
FIG. 10E is an exemplary diagram for explaining a method of generating the second run curve according to the embodiment.
FIG. 10F is an exemplary diagram for explaining a method of generating the second run curve according to the embodiment.
FIG. 10G is an exemplary diagram for explaining a method of generating the second run curve according to the embodiment.
FIG. 11 is an exemplary diagram for explaining a case where the second run curve according to the embodiment is updated.
FIG. 12A is an exemplary diagram for explaining another method of generating the second run curve according to the embodiment.
FIG. 12B is an exemplary diagram for explaining the other method of generating the second run curve according to the embodiment.
FIG. 13 is an exemplary flowchart for explaining processing to be performed by an operation control ground system according to the embodiment.

### DETAILED DESCRIPTION

The following describes an embodiment with reference to the drawings.

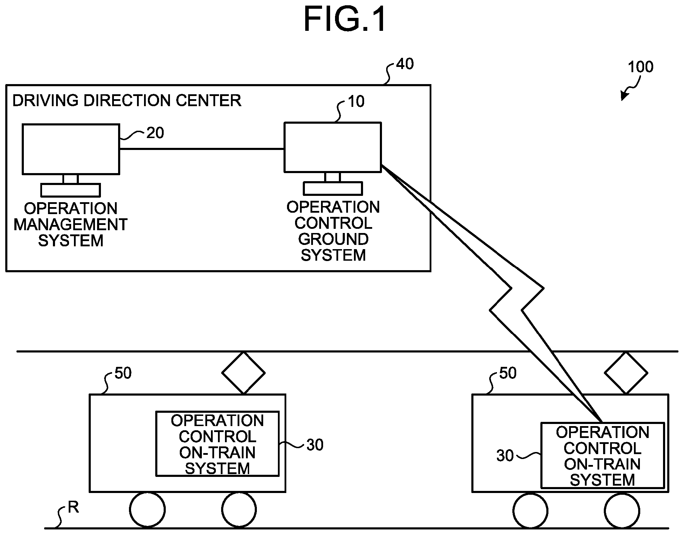

First, the outline of an operation control system 100 according to the embodiment is described with reference to FIG. 1.

As illustrated in FIG. 1, the operation control system 100 includes an operation control ground system 10, an operation management system 20, and an operation control on-train system 30. The operation control ground system 10 and the operation management system 20 are implemented in the form of a computer terminal installed in a driving direction center 40 built on the ground. The operation control on-train system 30 is installed in each train 50 that runs on a track R.

The operation management system 20 is configured to manage operation plans (hereinafter referred to as control diagrams) of the respective trains 50 that runs on the track R and train-car formation information thereon. The operation control ground system 10 and the operation control on-train system 30 are configured so as to be able to wirelessly communicate with each other.

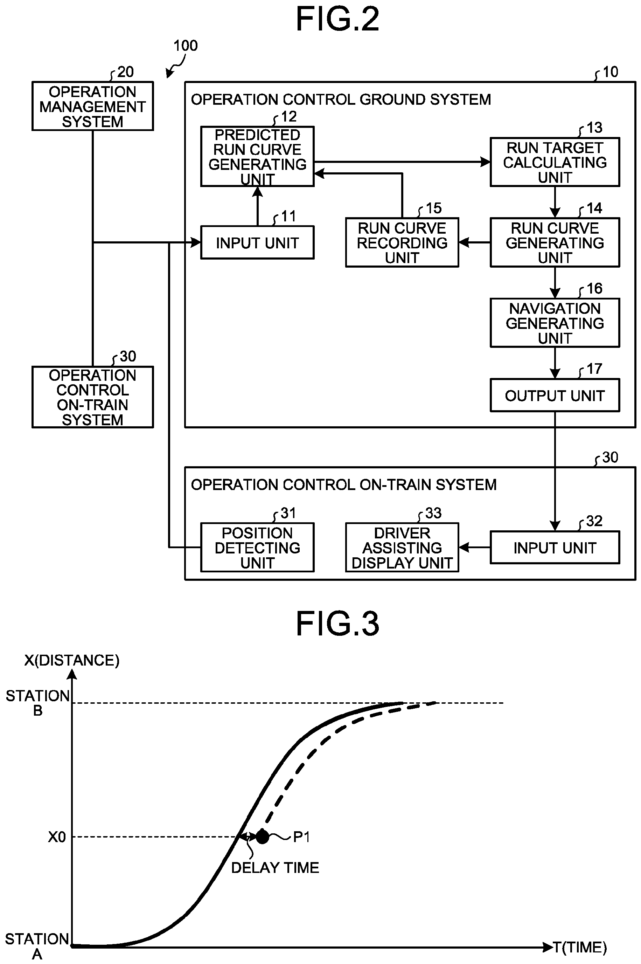

Next, the internal configuration of the operation control system 100 according to the embodiment is described with reference to FIG. 2.

As illustrated in FIG. 2, the operation control ground system 10 includes an input unit 11, a predicted run curve generating unit 12, a run target calculating unit 13, a run curve generating unit 14, a run curve recording unit 15, a navigation generating unit 16, and an output unit 17 as main components. The operation control on-train system 30 includes a position detecting unit 31, an input unit 32, and a driver assisting display unit 33. The predicted run curve generating unit 12, the run target calculating unit 13, the run curve generating unit 14, and the navigation generating unit 16 are examples of a "first generation unit", a "calculation unit", a "second generation unit", and a "third generation unit". The driver assisting display unit 33 is an example of a "presentation unit".

The input unit 11 is configured to acquire the most recent control diagrams from the operation management system 20 to update the control diagrams recorded in units such as the predicted run curve generating unit 12. The input unit 11 is configured to acquire positional information and speed information on the respective trains 50 from the position detecting unit 31 in the operation control on-train system 30 on a certain cycle and transmit the acquired information to the predicted run curve generating unit 12. The positional information includes the current front-end positions and the current rear-end positions of the respective trains 50. In the embodiment, only the front-end positions of the respective trains 50 may be acquired as the positional information, and the rear-end positions of the respective trains 50 may be calculated based on the acquired front-end positions of the respective positions and the train-car formation information on the respective trains 50 that is acquired from the operation management system 20 or the like.

The predicted run curve generating unit 12 is configured to, based on the positional information and the speed information that are acquired from the input unit 11, detect whether there is any one of the trains 50 stopping at each station (train-stopping station or train-halting station) on the track R and whether there are any of the trains 50 on the track within a range in which communication with an access point installed in each station is possible. A range in which communication with each station is possible is a range in which a time length sufficient for a train to acquire data properly can be secured even when the train passes the station site at the highest permitted speed. Each of the trains 50 thus detected is hereinafter referred to as a controlled train.

Based on the most recent control diagrams acquired from the operation management system 20, the predicted run curve generating unit 12 specifies one or more trains (second trains) that are each likely to, while the controlled train (first train) is running between stations to stop at, be a preceding train or a following train with respect to the controlled train.

The preceding train is one of the trains 50 that is likely to influence the controlled train because it is running, ahead of the controlled train, in the same direction and on the same track as the controlled train. Herein, the influence includes abrupt deceleration of the controlled train that occurs upon action of the safety brake (not illustrated) or the like of the controlled train if the preceding train and the controlled train become excessively close to each other when the preceding train has been delayed.

The following train is one of the trains 50 that is likely to be influenced by the controlled train because it is running, behind the controlled train, in the same direction and on the same track as the controlled train. Herein, the influence includes abrupt deceleration of the following train that occurs upon action of the safety brake (not illustrated) or the like of the following train if the controlled train and the following train become excessively close to each other because when the controlled train is delayed.

A train to be overtaken that has yet to be overtaken by the controlled train can be treated in the similar manner as a preceding train thereof. In contrast, the train to be overtaken that has already been overtaken by the controlled train can be treated in the similar manner as a following train thereof. Here, the train to be overtaken means a train that enters a train-stopping station before the controlled train, then stops on a subsidiary main track of the train-stopping station, and then departs from the train-stopping station after being overtaken by the controlled train.

To avoid such influence as the above-described influence, the predicted run curve generating unit 12 first generates predicted run curves (hereinafter referred to as first run curves) for the trains 50 that are each likely to be a preceding train or a following train with respect to the controlled train while the controlled train is running between stations to stop at.

Here, an example of a method for generating each of the first run curves is described with reference to FIG. 3.

First, a method for generating the first run curve for a preceding train is described. The solid curve in FIG. 3 is a run curve that is generated when the preceding train departs from a station A and that represents the relation between times and travelled distances during travel from the station A to a station B of the preceding train. The point P1 indicates the actual position of the preceding train as at the time of generation of the first run curve. Information on this point P1 is calculated based on information such as the positional information and the speed information acquired from the position detecting unit 31 in the operation control on-train system 30.

In FIG. 3, the point P1 is positioned in the right side (the side of later times) of the solid curve. Hence FIG. 3 illustrates that the preceding train has passed the position X0 between the station A and the station B behind schedule, that is, the preceding train has been delayed. In response, the predicted run curve generating unit 12 calculates the first run curve for the preceding train assuming that the preceding train travels from the time and the position of the point P1 in accordance with the same relation between the position and the speed as that represented by the original run curve (the solid curve). That is, the predicted run curve generating unit 12 calculates the dotted curve in FIG. 3 as the first run curve for the preceding train. In the embodiment, when the delay time in the above case is minus (the point P1 is positioned in the left side of the solid curve in the example in FIG. 3), the predicted run curve generating unit 12 calculates the original run curve (the solid curve) as the first run curve for the preceding train assuming that the delay time is zero. Note that the first run curve for the preceding train is calculated based on the control diagram before the departure of the preceding train.

As regard the following train, with consideration to a case where the trains are operated in such a manner as to resolve delay, a run curve generated when the following train departs from or passes a station is used as the first run curve so that the following train can be prevented from influencing a train that further follows it.

As illustrated in FIG. 2, upon calculating the above-described first run curve, the predicted run curve generating unit 12 is configured to transmit the first run curves to the run target calculating unit 13. The run target calculating unit 13 is configured to calculate target positions and target times based on the first run curves, the target positions and target times indicating which positions the controlled train needs to pass at what times so as to be influenced by a train likely to be a preceding train or so as not to influence a train likely to be a following train. More specifically, the run target calculating unit 13 is configured to calculate: a preceding target position and a preceding target time for avoiding the controlled train from starting a stopping operation in response to signal indication according to the on-track position of the preceding train; or a following target position and a following target time for avoiding the following train from starting a stopping operation in response to signal indication according to the on-track position of the controlled train.

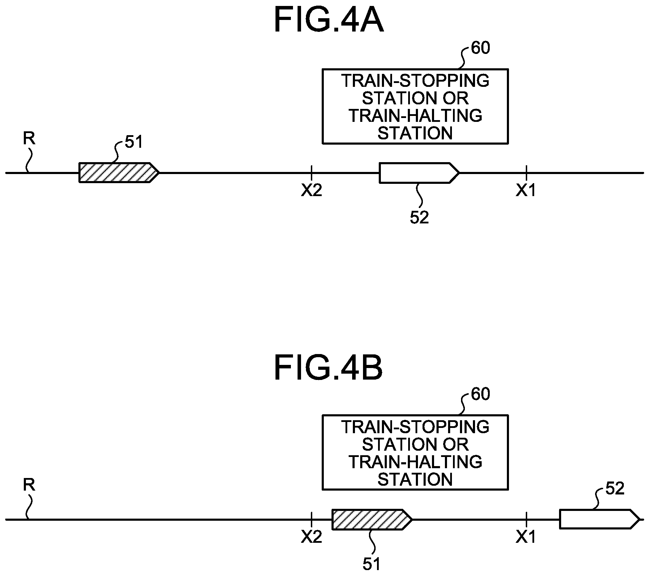

Here, with reference to FIG. 4A to FIG. 8C, methods for calculating the target positions and the target times are described.

### (1) When there is presumed to be a preceding train

With reference to FIGS. 4A and 4B, description is given of a method for calculating the preceding target position and the preceding target time when there is presumed to be the preceding train running on the same track in the same direction as the controlled train ahead of the controlled train. In FIGS. 4A and 4B, the controlled train and the preceding train are assigned reference numerals 51 and 52, respectively. While FIG. 4A illustrates a state where the preceding train 52 has stopped at a train-stopping station or train-halting station 60, FIG. 4B illustrates a state where the preceding train 52 has already departed from the train-stopping station or train-halting station 60. Each section defined by positions X1 and X2 or the like is generally called a block section.

Here, this is presumed to be a case where, until the rear-end of the preceding train 52 passes a first position X1, the front-end of the controlled train 51 is not allowed to enter a second position X2 behind the first position X1. That is, this is presumed to be a case where, if the front-end of the controlled train 51 approaches the second position X2 before the rear-end of the preceding train 52 passes the first position X1, the controlled train 51 inevitably starts a stopping operation in response to signal indication according to the on-track position of the preceding train 52.

To avoid the controlled train 51 from starting a stopping operation in this case, the run target calculating unit 13 is configured to: calculate the second position X2 as the preceding target position; and calculate the preceding target time in a manner that a time length presumed to be needed for the controlled train 51 running at the highest permitted speed to stop on the second position X2 is added to a time at which the rear-end of the preceding train 52 is scheduled to pass the first position X1. With the controlled train 51 operated based on the preceding target position and preceding target time thus calculated, the controlled train 51 is not influenced by the preceding train 52, and the front-end of the controlled train 51 passes the second position X2 after the rear-end of the preceding train 52 passes the first position X1. Consequently, the controlled train 51 can be avoided from starting a stopping operation in response to signal indication according to the on-track position of the preceding train 52.

### (2) When there is presumed to be a following train

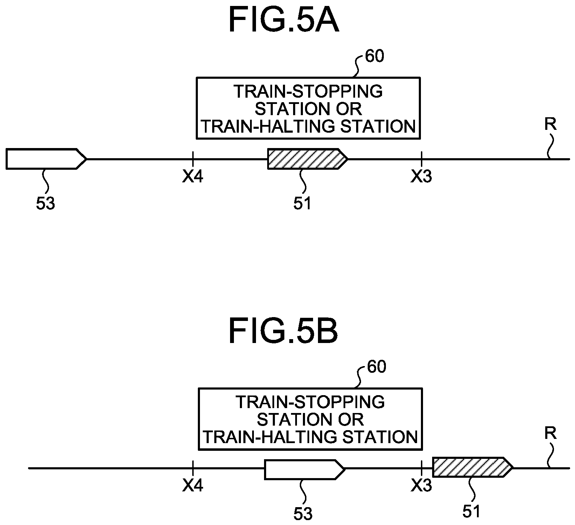

With reference to FIGS. 5A and 5B, description is given of a method for calculating the following target position and the following target time when there is presumed to be the following train running on the same track in the same direction as the controlled train behind the controlled train. In FIGS. 5A and 5B, the controlled train and the following train are assigned reference numerals 51 and 53, respectively. While FIG. 5A illustrates a state where the controlled train 51 has stopped at the train-stopping station or train-halting station 60, FIG. 5B illustrates a state where the controlled train 51 has already departed from the train-stopping station or train-halting station 60.

Here, this is presumed to be a case where, until the rear-end of the controlled train 51 passes a third position X3, the front-end of the following train 53 is not allowed to enter a fourth position X4 behind the third position X3. That is, this is presumed to be a case where, if the front-end of the following train 53 approaches the fourth position X4 before the rear-end of the controlled train 51 passes the third position X3, the following train 53 inevitably starts a stopping operation in response to signal indication according to the on-track position of the controlled train 51.

To avoid the following train 53 from starting a stopping operation in this case, the run target calculating unit 13 is configured to: calculate the third position X3 as the following target position; and calculate the following target time in a manner that a time length presumed to be needed for the following train 53 running at the highest permitted speed to stop on the fourth position X4 is subtracted from a time at which the front-end of the following train 53 is scheduled to enter the fourth position X4. With the controlled train 51 operated based on the following target position and following target time thus calculated, the controlled train 51 does not influence the following train 53, and the front-end of the following train 53 passes the fourth position X4 after the rear-end of the controlled train 51 passes the third position X3. Consequently, the following train 53 can be avoided from starting a stopping operation in response to signal indication according to the on-track position of the controlled train 51.

### (3) When there is presumed to be a train to be overtaken

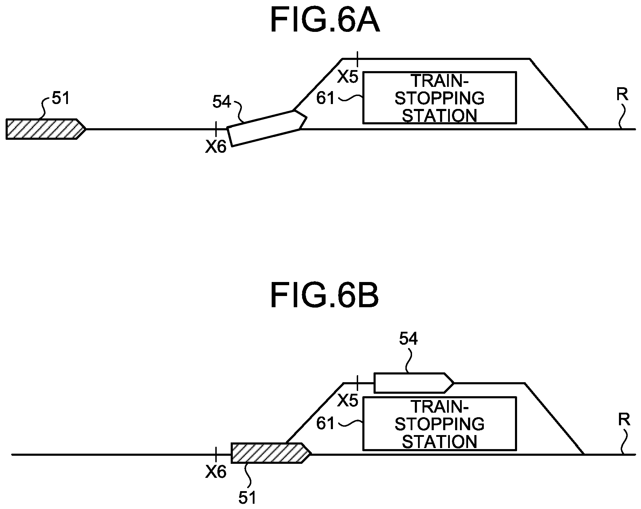

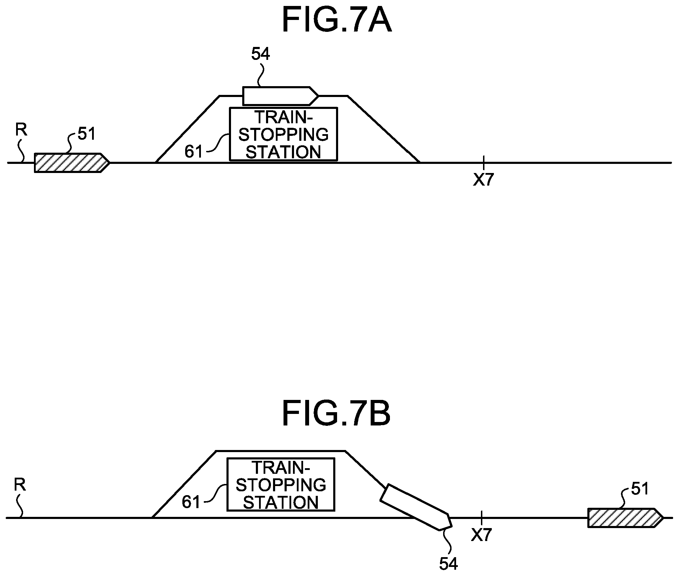

Next, with reference to FIGS. 6A and 6B and FIGS. 7A and 7B, description is given of methods for calculating target positions and target times when the train to be overtaken is presumed to be present on the same track in the same direction as the controlled train behind the controlled train. As mentioned above, the train to be overtaken that has yet to be overtaken by the controlled train can be treated in the similar manner as the preceding train thereof, and the train to be overtaken that has already been overtaken by the controlled train can be treated in the similar manner as the following train thereof.

With reference to FIGS. 6A and 6B, description is given of a method for calculating a preceding target position and a following target time when the train to be overtaken has yet to be overtaken by the controlled train. In FIGS. 6A and 6B, the controlled train and the train to be overtaken are assigned reference numerals 51 and 54, respectively. While FIG. 6A illustrates a state where the train-to-be-overtaken 54 is entering a subsidiary main track of a train-stopping station 61 so as to stop on the subsidiary main track, FIG. 6B illustrates a state where the controlled train 51 is entering a main track of the train-stopping station 61 in order to overtake the train-to-be-overtaken 54.

Here, this is presumed to be a case where, until the rear-end of the train-to-be-overtaken 54 passes a fifth position X5, the front-end of the controlled train 51 is not allowed to enter a sixth position X6 behind the fifth position X5. That is, this is presumed to be a case where, if the front-end of the controlled train 51 approaches the sixth position X6 before the rear-end of the train-to-be-overtaken 54 passes the fifth position X5, the controlled train 51 inevitably starts a stopping operation in response to signal indication according to the on-track position of the train-to-be-overtaken 54.

To avoid the controlled train 51 from starting a stopping operation in this case, the run target calculating unit 13 is configured to: calculate the sixth position X6 as the preceding target position; and calculate the preceding target time in a manner that a time length presumed to be needed for the controlled train 51 running at the highest permitted speed to stop on the sixth position X6 and a time length presumed to be needed to set up a course for the controlled train 51 are added to a time at which the rear-end of the train-to-be-overtaken 54 is scheduled to pass the fifth position X5. With the controlled train 51 operated based on the preceding target position and preceding target time thus calculated, the controlled train 51 can avoid being influenced by the train-to-be-overtaken 54, and the front-end of the controlled train 51 passes the sixth position X6 after the rear-end of the train-to-be-overtaken 54 passes the fifth position X5. Consequently, the controlled train 51 can be avoided from starting a stopping operation in response to signal indication according to the on-track position of the train-to-be-overtaken 54.

With reference to FIGS. 7A and 7B, description is given of a method for calculating a following target position and a following target time when a train to be overtaken has already been overtaken by the controlled train. As in FIGS. 6A and 6B, reference numerals 51 and 54 denote the controlled train and the train to be overtaken, respectively, in FIGS. 7A and 7B. While FIG. 7A illustrates a state where the train-to-be-overtaken 54 has stopped on the subsidiary main track of the train-stopping station 61, FIG. 7B illustrates a state where the train-to-be-overtaken 54 is exiting from the train-stopping station 61 after having departed after the controlled train 51 has passed the main track of the train-stopping station 61 and overtaken the train-to-be-overtaken 54.

Here, this is presumed to be a case where, until the rear-end of the controlled train 51 passes a seventh position X7, the front-end of the train-to-be-overtaken 54 is not allowed to depart from the train-stopping station 61. That is, this is presumed to be a case where, if the train-to-be-overtaken 54 is starting to depart from the train-stopping station 61 before the rear-end of the controlled train 51 passes the seventh position X7, the train-to-be-overtaken 54 inevitably starts a stopping operation in response to signal indication according to the on-track position of the controlled train 51.

To avoid the train-to-be-overtaken 54 from starting a stopping operation in this case, the run target calculating unit 13 is configured to: calculate the seventh position X7 as the following target position; and calculate the following target time in a manner that a time length presumed to be needed to set up a course for the train-to-be-overtaken 54 and a time length presumed to be needed for the train-to-be-overtaken 54 to actually depart after signal indication permitting the train-to-be-overtaken 54 to depart is given are subtracted from a time at which the train-to-be-overtaken 54 is scheduled to depart. With the controlled train 51 operated based on the following target position and following target time thus calculated, the train-to-be-overtaken 54 departs after the rear-end of the controlled train 51 passes the seventh position X7. Consequently, the train-to-be-overtaken 54 can be avoided from starting a stopping operation in response to signal indication according to the on-track position of the controlled train 51.

### (4) When (1) to (3) occur at the same time

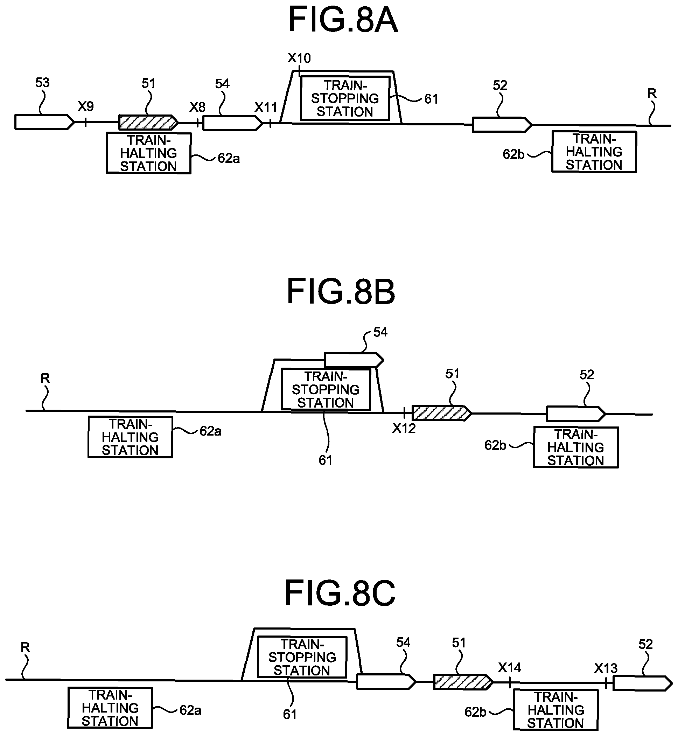

With reference to FIGS. 8A to 8C, description is given of methods for calculating target positions and target times when it is presumed that the preceding train, the following train, and the train to be overtaken are all present. In the case of (4) described here, a plurality of target positions and a plurality of target times of the controlled train are calculated based on the relations thereof with the preceding train, the following train, and the train to be overtaken. In FIGS. 8A to 8C, the controlled train, the preceding train, the following train, and the train to be overtaken are assigned reference numerals 51, 52, 53, and 54, respectively, as in the case of FIG. 4A to FIG. 7B. In FIGS. 8A to 8C, after departing from a train-halting station 62a, the controlled train 51 passes the train-stopping station 61 and stops at a train-halting station 62b. FIG. 8A illustrates a state where the controlled train 51 is running, behind the train-to-be-overtaken 54, on the same track and in the same direction as the train-to-be-overtaken 54; FIG. 8B illustrates a state where the controlled train 51 has passed the main track of the train-stopping station 61 and thereby overtaken the train-to-be-overtaken 54 that has stopped on the subsidiary main track of the train-stopping station 61; and FIG. 8C illustrates a state where the controlled train 51 is running, ahead of the train-to-be-overtaken 54, on the same track and in the same direction as the train-to-be-overtaken 54. For simplification, the following train 53 is omitted from FIGS. 8B and 8C.

When it is presumed that the state in FIG. 8A has been entered, the run target calculating unit 13 uses the same calculation method as in the case of (2) to: calculate a position X8 as the following target position concerned with the following train 53; and calculate the following target time concerned with the following train 53 in a manner that a time length presumed to be needed for the following train 53 running at the highest permitted speed to stop on a position X9 is subtracted from a time at which the front-end of the following train 53 is scheduled to enter the position X9. When it is presumed that the state in FIG. 8A has been entered, the run target calculating unit 13 uses the same calculation method as the first one in the case of (3) to: calculate a position X11 as the preceding target position concerned with the train-to-be-overtaken 54; and calculate the preceding target time concerned with the train-to-be-overtaken 54 in a manner that a time length presumed to be needed for the controlled train 51 running at the highest permitted speed to stop on the position X11 and a time length presumed to be needed to set up a course for the controlled train 51 are added to a time at which the rear-end of the train-to-be-overtaken 54 is scheduled to pass the position X10.

When it is presumed that the state in FIG. 8B has been entered, the run target calculating unit 13 uses the same calculation method as the second one in the case of (3) to: calculate a position X12 as the following target position concerned with the train-to-be-overtaken 54; and calculate the following target time concerned with the train-to-be-overtaken 54 in a manner that a time length presumed to be needed to set up a course for the train-to-be-overtaken 54 and a time length presumed to be needed for the train-to-be-overtaken 54 to actually depart after signal indication permitting the train-to-be-overtaken 54 to depart is given are subtracted from a time at which the train-to-be-overtaken 54 is scheduled to depart from the train-stopping station 61.

When it is presumed that the state in FIG. 8C has been entered, the run target calculating unit 13 uses the same calculation method as in the case of (1) to: calculate a position X14 as the preceding target position concerned with the preceding train 52; and calculate the preceding target time concerned with the preceding train 52 in a manner that a time length presumed to be needed for the controlled train 51 running at the highest permitted speed to stop on the position X14 is added to a time at which the rear-end of the preceding train 52 is scheduled to pass a position X13.

The run target calculating unit 13 does not calculates the target positions and target times when the controlled train has actually entered states such as those illustrated in FIG. 4A to FIG. 8C, but calculates the target positions and target times when it is presumed that the controlled train is going to enter states such as those illustrated in FIG. 4A to FIG. 8C.

As illustrated in FIG. 2, the run target calculating unit 13 is configured to transmit the target positions and target times thus calculated to the run curve generating unit 14. In addition, the run curve generating unit 14 is configured to generate a run curve (hereinafter referred to as second run curve) according to which the controlled train passes each target positions at corresponding target time.

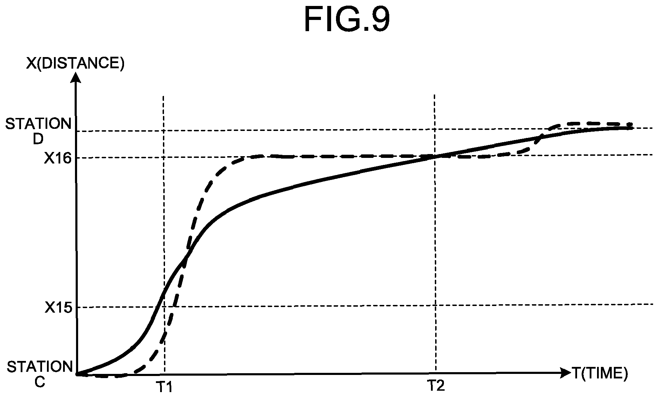

FIG. 9 is a diagram illustrating an example of the second run curve for when the controlled train travels from a station C to a station D. The solid curve in FIG. 9 represents the second run curve according to the embodiment generated so as to satisfy conditions determined by the above target positions and the target times, and the dotted curve in FIG. 9 represents a comparative run curve generated without reflecting therein the conditions of the above target positions and the target times. The respective points X15 and T1 in FIG. 9 represent the following target position and the following target time that are attributable to the presence of the following train or the train to be overtaken that has yet to be overtaken, and the respective points X16 and T1 in FIG. 9 represent the preceding target position and the preceding target time that are attributable to the presence of the preceding train or the train to be overtaken that has already been overtaken.

As illustrated in FIG. 9, the second run curve (refer to the solid curve) according to the embodiment represents that, while the position X15 is passed before the time T1, the position X16 is passed after the time T2. Unlike the comparative run curve (refer to the dotted curve) having a shape including a part corresponding to abrupt deceleration before the arrival at the position X16 followed by a long stop at the position X16, the second run curve according to the embodiment has a shape not including any part corresponding to abrupt deceleration. Consequently, operating the controlled train in accordance with the second run curve enables the controlled train to be smoothly operated without influencing and being influenced by the preceding train, the following train, and the train to be overtaken.

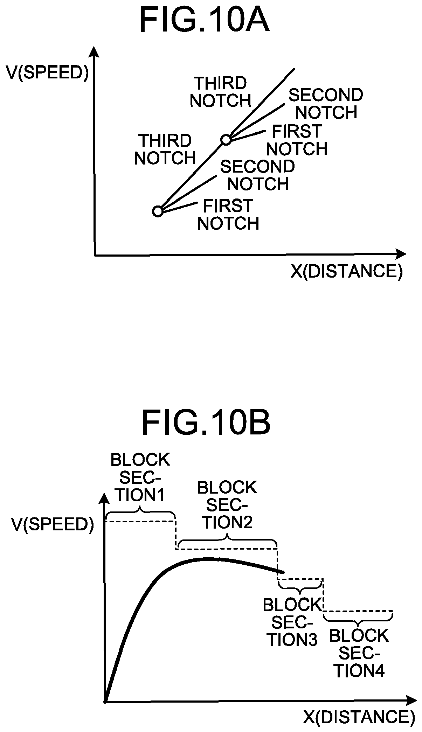

Here, examples of the method for generating the second run curve are described in further detail with reference to FIG. 10A to FIG. 10G.

At the start, as illustrated in FIG. 10A, the run curve generating unit 14 calculates, as candidate solutions for the second run curve, run curves corresponding to all patterns of driving manner that are available when the notches of a master controller of the controlled train are switched in a certain cycle in various manners. Although FIG. 10A illustrates an example in which the notches are switchable between three stages of the first to the third notches, the notches may be switchable between four or more stages.

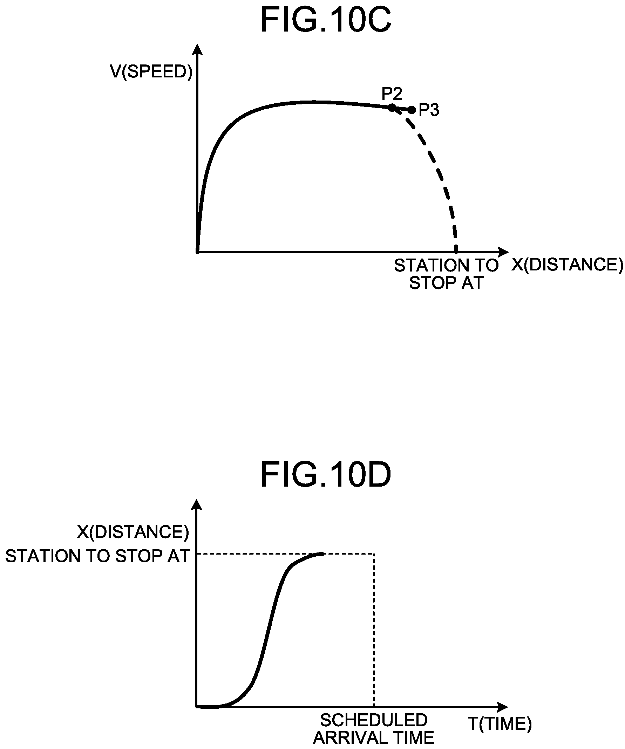

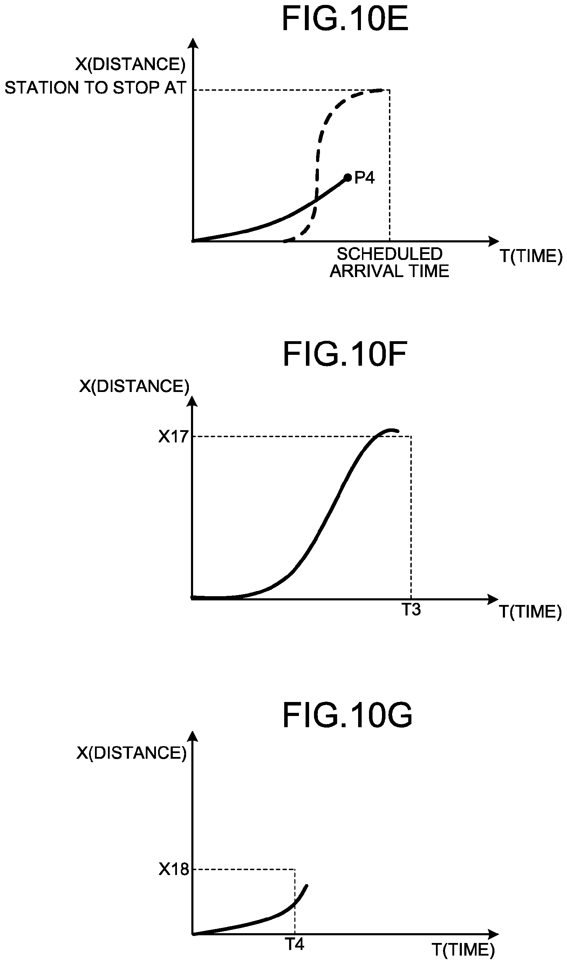

The run curve generating unit 14 applies pruning to the thus calculated candidate solutions in any one of the methods illustrated in FIGS. 10B, 10C, 10D, 10E, 10F, and 10G to be described later, thereby finding a solution for the second run curve that satisfies the above conditions of the target positions and the target times.

FIG. 10B is a diagram illustrating an example of pruning based on speed limits imposed in respective block sections on the track R, the speed limits being attributable to, for example, the presence of a preceding train. The dotted sequential line in FIG. 10B represents an example of the speed limits in the respective block sections. The solid curve in FIG. 10B represents an example of the candidate solution for the second run curve. The candidate solution illustrated in FIG. 10B here is excluded from the candidate solutions because it constitutes a run curve having a part exceeding the corresponding speed limit.

FIG. 10C is a diagram illustrating an example of pruning based on whether, if being braked and decelerated to the maximum, the controlled train can stop at a station to stop at. The dotted curve in FIG. 10C represents an example of change in speed in relation to the distance travelled when the controlled train is braked and decelerated to the maximum. That is, the end point P2 of the dotted curve in FIG. 10C represents the limit position and speed from which, by being decelerated to the maximum, the controlled train can stop at the station to stop at. The solid curve in FIG. 10C represents an example of the candidate solution for the second run curve. In FIG. 10C, the end point P3 of the solid curve is found at a position shifted rightward from the end point P2 of the dotted curve. The candidate solution illustrated in FIG. 10C here is excluded from the candidate solutions because it thus constitutes a run curve such that, even by being braked and decelerated to the maximum, the controlled train cannot stop at the station to stop at.

FIG. 10D is a diagram illustrating an example of pruning based on whether the controlled train can arrive as scheduled at the station to stop at. The solid curve in FIG. 10D represents an example of the candidate solution for the second run curve. The candidate solution illustrated in FIG. 10D here is excluded from the solution candidates because it constitutes a run curve such that the controlled train arrives before a scheduled arrival time at the station to stop at.

Similarly to FIG. 10D, FIG. 10E is a diagram illustrating an example of pruning based on whether the controlled train can arrive as scheduled at the station to stop at. The dotted curve in FIG. 10E represents an example of one of the run curves such that the controlled train arrives as schedules at the station to stop at, the one making the controlled train travel fastest over the distance therefrom to the station to stop at. The solid curve in FIG. 10E represents an example of the candidate solution for the second run curve. In FIG. 10E, the end point P4 of the solid curve is positioned in the right side (the side of later times) of the dotted curve. Hence, by running in accordance with the solid curve, the controlled train arrives at the end point P4 at a time later than a time at which it arrives there by running according to the dotted curve. That is, the candidate solution illustrated in FIG. 10E here is excluded from the solution candidates because it constitutes a run curve that cannot make the controlled train arrive by the scheduled arrival time at the station to stop at even by running in the fastest possible manner from the position and time that correspond to the end point P4.

FIG. 10F is a diagram illustrating an example of pruning based on whether conditions of the target position and the target time for a case when a preceding train or a train to be overtaken that has yet to be overtaken is present are satisfied. In FIG. 10F, while X17 indicates the target position, T3 indicates the target time. The solid curve in FIG. 10F represents an example of the candidate solution for the second run curve. The candidate solution illustrated in FIG. 10F here is excluded from the candidate solutions because it constitutes a run curve such that the controlled train arrives at the target position X17 earlier than the target time T3.

FIG. 10G is a diagram illustrating an example of pruning based on whether conditions of the target position and the target time for a case when a following train or a train to be overtaken that has already been overtaken is present are satisfied. In FIG. 10G, while X18 indicates the target position, T4 indicates the target time. The solid curve in FIG. 10G represents an example of the candidate solution for the second run curve. The candidate solution illustrated in FIG. 10G here is excluded from the candidate solutions because it constitutes a run curve such that the controlled train does not arrive at the target position X18 by the target time T4.

For example, the run curve generating unit 14 is configured to: calculate the least power-consuming solution from the candidate solutions having been obtained by the narrowing down through the above-described pruning; and thereby generate the second run curve that works as a solution. As illustrated in FIG. 2, the run curve generating unit 14 then transmits the thus generated second run curve to the navigation generating unit 16 while recording the second run curve in the run curve recording unit 15.

The navigation generating unit 16 is configured to generate navigation that indicates a manner of operation that can make the controlled train travel in accordance with the second run curve. More specifically, the navigation generating unit 16 is configured to read out, from the second run curve, a point (in terms of position, time, or speed) at which the notches are switched and generate data indicating such information as the extent to which the notches are operated. The navigation generating unit 16 is configured to transmit the thus generated navigation to the operation control on-train system 30 via the output unit 17.

The input unit 32 of the operation control on-train system 30 is configured to transmit, to the driver assisting display unit 33, the navigation received from the operation control ground system 10. The driver assisting display unit 33 is configured to present (display) the navigation transmitted from the input unit 32 in a form that renders the navigation understandable to a driver.
For example, based on the navigation transmitted from the input unit 32, the driver assisting display unit 33 displays information in the form of a screen, the information being a speed at which the notches need to be switched, the extent to which the notches are switched, and the current speed. Information to be displayed in this screen (in this example, a speed at which the notches need to be switched and the extent to which the notches are switched) on the switching of the notches is switched to new information each time the notches are switched.

The operation control ground system 10 according to the embodiment may be configured to generate the updated second run curve by acquiring the most recent positional information and the most recent speed information on the respective trains 50 when the controlled train passes each station. In this case, the second run curve is updated when the controlled train arrives at a position at which communication thereof with each station becomes possible. The position at which communication thereof with each station becomes possible is a position at which it becomes possible to secure a time length sufficient for the controlled train to acquire data properly even when it passes the station site at the highest permitted speed.

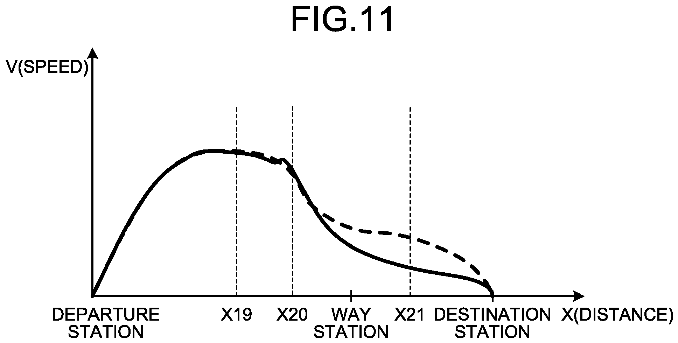

FIG. 11 is a diagram illustrating an example of updating the second run curve. The dotted curve in FIG. 11 represents the second run curve to which the updating has not been made, and the solid curve in FIG. 11 represents the second run curve to which the updating has been made. As illustrated in FIG. 11, the solid curve and the dotted curve are substantially the same up to the position X19 but start to be different at the position X19. That is, in the example illustrated in FIG. 11, the position X19 represents the position at which it becomes possible for the controlled train to communicate with the way station. Thus, in the example illustrated in FIG. 11, when the controlled train arrives at the position X19 located before the way station, it becomes possible for the controlled train to communicate with the way station, so that the second run curve is updated. While the point X20 in FIG. 11 represents the following target position for a case when a following train or a train to be overtaken that has already been be overtaken is presumed to be present, the point X21 therein represents the preceding target position for a case when a preceding train or a train to be overtaken that has yet to be overtaken is present.

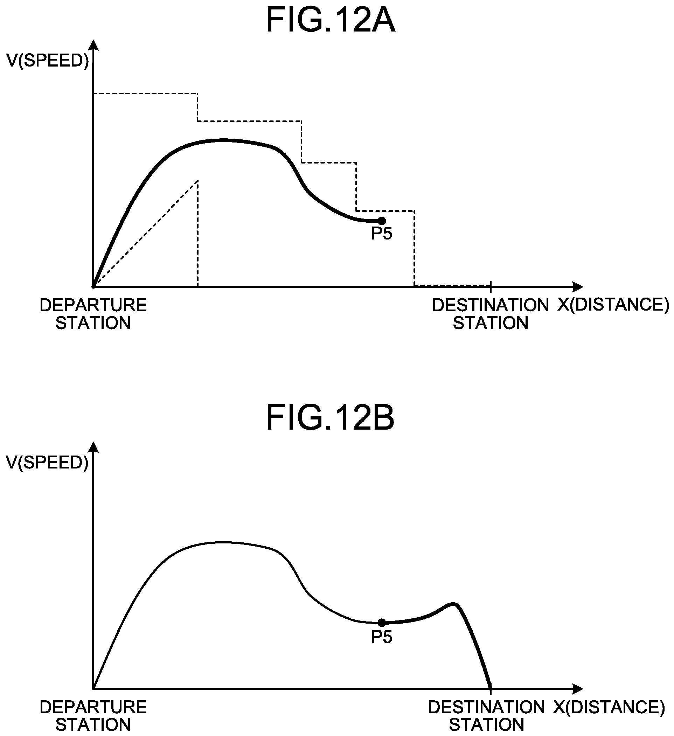

Although the example in which the least power-consuming solution is calculated as the solution for the second run curve has been illustrated above, a solution that results in the earliest arrival at a station to arrive at may be calculated as the solution for the second run curve in the embodiment as illustrated in FIGS. 12A and 12B.

FIG. 12A is a diagram illustrating an example of the run curve that satisfies conditions of the target position and the target time and conditions of speed limits (refer to the dotted sequential line) in respective block sections and that results in the earliest arrival at the position of the point P5. This example supposes that, when the controlled train arrives at the position of the point P5, the speed limits are removed. That is, this example supposes that, when the controlled train arrives at the position of the point P5, the speed limits are removed for a reason such as entrance of a train preceding the controlled train into the next block section or switching of a course formed of the track R from a course for a train to be overtaken to a course for the controlled train. This means that, as illustrated in FIG. 12B, it is possible to find the solution for the second run curve by generating a run curve that starts from the point P5 and that results in the earliest arrival at the station to arrive at.

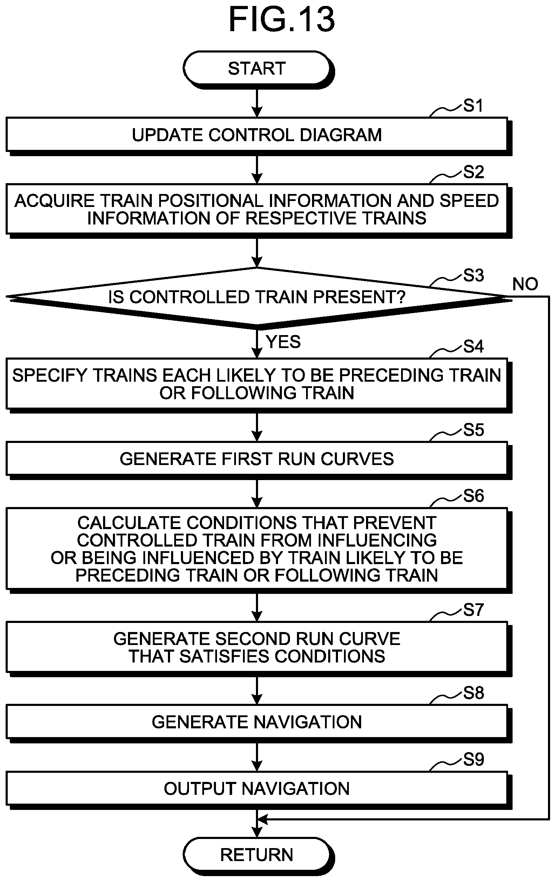

Next, an example of processing to be performed by the operation control ground system 10 according to the embodiment is described with reference to FIG. 13. The processing illustrated in FIG. 13 here is executed each time each of the trains 50 passes a position at which it is possible to communicate with each station.

In the embodiment, at the start, the input unit 11 acquires the most recent control diagrams from the operation management system 20 and thereby updates the control diagrams recorded in units such as the run curve recording unit 15 at S1 as illustrated in FIG. 13. The processing is then shifted to S2.

At S2, the input unit 11 acquires positional information and speed information on the respective trains 50 from the position detecting unit 31 in the operation control on-train system 30. At this processing, the input unit 11 also acquires information such as train-car formation information on the respective trains 50 from the operation management system 20 and the like. The information acquired at S2 such as the positional information and the speed information is transmitted to the predicted run curve generating unit 12. The processing is then shifted to S3.

At S3, based on the information acquired at S2 such as the positional information and the speed information, the predicted run curve generating unit 12 determines whether a controlled train is present. Here, a controlled train means each of the trains 50 that have stopped at any of stations (train-stopping stations or train-halting stations) on a track R and the trains 50 that are located on the track and at any positions in which it is possible to communicate with any of the stations.

If it is determined at S3 that no controlled train is present, the processing is ended without performing the processing at S4 to S9. In contrast, if it is determined at S3 that any controlled train is present, the processing is shifted to S4. Note that when a plurality of controlled trains are present, the processing at S4 to S9 is performed on the individual controlled trains.

At S4, based on the control diagrams updated at S1, the predicted run curve generating unit 12 specifies trains that are each likely to be a preceding train or a following train of the controlled train while the controlled train is running between stations to stop at. The processing is then shifted to S5.

At S5, the predicted run curve generating unit 12 generates predicted run curves (first run curves) for the respective trains specified at S4. The first run curves generated at S5 are transmitted to the run target calculating unit 13. The processing is then shifted to S6.

At S6, based on the first run curves generated at S5, the run target calculating unit 13 calculates conditions under which the controlled train is not influenced by and does not influence the trains that are each likely to be a preceding train or a following train with respect thereto. More specifically, based on the first run curves, the run target calculating unit 13 calculates target positions and target times that indicate which positions the controlled train needs to pass at what times so as not to be influenced by trains each likely to be a preceding train or a following train with respect thereto. Still more specifically, the run target calculating unit 13 calculates the preceding target position and the preceding target time for avoiding the controlled train from starting a stopping operation in response to signal indication according to the on-track position of the preceding train, and calculates the following target position and the following target time for avoiding the following train thereof from starting the stopping operation in response to the signal indication according to the on-track position of the controlled train. Conditions such as the target positions and target times thus calculated are transmitted to the run curve generating unit 14. The processing is then shifted to S7.

At S7, the run curve generating unit 14 generates a run curve (the second run curve) for the controlled train, the run curve satisfying the conditions calculated at S6. The first run curve generated at S7 is recorded in the run curve recording unit 15 and transmitted to the navigation generating unit 16. The processing is then shifted to S8.

At S8, the navigation generating unit 16 generates navigation based on the second run curve generated at S7. The navigation generated at this processing is a manner of operation that can make the controlled train travel in accordance with the second run curve. The navigation generated at S8 is transmitted to the output unit 17. The processing is then shifted to S9.

At S9, the output unit 17 outputs the navigation generated at S8 to the operation control on-train system 30. More specifically, the output unit 17 transmits data that signifies the navigation generated at S8 to the operation control on-train system 30. The operation control on-train system 30 displays the navigation received from the output unit 17 on the driver assisting display unit 33. The processing is then ended.

As described above, the operation control ground system 10 according to the embodiment includes the predicted run curve generating unit 12, the run curve generating unit 14, and the navigation generating unit 16. The predicted run curve generating unit 12 is configured to generate predicted run curves (first run curves) for trains (second trains) each likely to be a preceding train or a following train with respect to a controlled train (first train). The run curve generating unit 14 is configured to, based on each of the first run curves, generate a run curve (second run curve) for the controlled train, the run curve avoiding the controlled train from being influenced by a train likely to be the preceding train and from influencing a train likely to be the following train. The navigation generating unit 16 is configured to generate navigation that indicates how the controlled train needs to be operated so that the controlled train can travel in accordance with the second run curve. The operation control on-train system 30 includes a driver assisting display unit 33 configured to present the navigation generated by the navigation generating unit 16 to the driver of the controlled train. This presentation causes the driver to drive the controlled train in accordance with the navigation, so that the controlled train can be driven so as not to be influenced by a train likely to be the preceding train and not to influence a train likely to be the following train. That is, the embodiment makes it possible to not only prevent an incident where the controlled train needs to be stopped because of its being excessively close to the preceding train but also prevent such incidents as delay and slowdown of the following train due to acceleration and deceleration of the controlled train.

While a certain embodiment of the present invention has been described above, the above-described embodiment has been presented by way of example only, and is not intended to limit the scope of the invention. The above-described embodiment may be embodied in a variety of other forms, and various omissions, substitutions, or changes may be made without departing from the spirit of the invention. The above-described embodiment and modifications thereof fall within the scope and spirit of the invention and also fall within the invention defined in the claims and its equivalents.

## Claims

1. An operation control system comprising a ground system and an on-train system, the ground system being configured to be able to communicate with trains running on tracks, the on-train system being installed on each of the trains, wherein
the ground system comprises:
a first generation unit configured to generate one or more first run curves predicted for one or more second trains each likely to be a preceding train or a following train with respect to a first train;
a second generation unit configured to generate a second run curve for the first train based on the first run curves, the second run curve preventing the first train from being influenced by and influencing running of the second trains; and
a third generation unit configured to generate navigation for causing the first train to run in accordance with the second run curve, and
the on-train system comprises a presentation unit configured to present the navigation.

2. The operation control system according to claim 1, wherein
the ground system further comprises a calculation unit configured to calculate, based on the first run curves, a target time at which the first train passes a certain position, the target time serving for preventing the first train from being influenced by or influencing the second trains, and
the second generation unit generates the second run curve, based on the certain position and the target time.

3. The operation control system according to claim 2, wherein, when the second train is the preceding train and when a front-end of the first train is not allowed to enter a second position until a rear-end of the preceding train passes a first position, the calculation unit specifies the second position as the certain position and calculates the target time in a manner that a time length needed for the first train running at the highest permitted speed to stop before entering the second position is added to a time at which the rear-end of the preceding train is scheduled to pass the first position, the second position being located behind the first position.

4. The operation control system according to claim 2, wherein, when the second train is the following train and when a front-end of the following train is not allowed to enter a fourth position until a rear-end of the first train passes a third position, the calculation unit specifies the third position as the certain position and calculates the target time in a manner that a time length needed for the following train running at the highest permitted speed to stop before entering the fourth position is subtracted from a time at which the front-end of the following train is scheduled to enter the fourth position, the fourth position being located behind the third position.

5. The operation control system according to claim 2, wherein, when the first train runs on a main track of a train-stopping station to overtake one of the second trains that has stopped on a subsidiary main track of the train-stopping station and when a front-end of the first train is not allowed to enter a sixth position until a rear-end of the one of the second trains passes a fifth position on the subsidiary main track, the calculation unit specifies the sixth position as the certain position and calculates the target time in a manner that a time length needed for the first train running at the highest permitted speed to stop before entering the sixth position and a time length needed to set up a course of the first train are added to a time at which the rear end of the one of the second trains is scheduled to pass the fifth position, the sixth position being located before entrance into the train-stopping station.

6. The operation control system according to claim 2, wherein, when the first train runs on a main track of a train-stopping station to overtake one of the second trains that has stopped on a subsidiary main track of the train-stopping station and when the one of the second train is not allowed to depart there until a rear-end of the first train that has passed the train-stopping station passes a seventh position, the calculation unit specifies the seventh position as the certain position and calculates the target time in a manner that a time length needed to set up a course of the one of the second trains and a time length needed for the one of the second trains to depart after signal indication permitting the one of the second trains to depart is given are subtracted from a time at which the one of the second trains is scheduled to depart.
